# EUROPEAN PATENT SPECIFICATION

(11) **EP 1 378 632 B1**
(45) Date of publication and mention of the grant of the patent: **11.03.2015**
(21) Application number: 03254222.7
(22) Date of filing: 02.07.2003
(51) Int. Cl.: F01D 9/06, F01D 25/08, F01D 11/00

(54) **Easy-fit heat screening device for connecting a cooling pipe and a through-hole formed in a nozzle support ring of a gas turbine**
Einfach montierbarer Hitzeschild zur Verbindung eines Kühlrohrs und einer Öffnung in einem Leitschaufelhalterungskranz einer Gasturbine
Ecran de protection thermique facile à monter pour la connection d'un tuyau de refroidissement et un trou placé dans un support de tuyères annulaire d'une turbine à gaz

(30) Priority: 03.07.2002 IT MI20021465
(43) Date of publication of application: 07.01.2004
(73) Proprietor: Nuovo Pignone Holding S.P.A., 50127 Firenze (IT)
(72) Inventor: Pecchioli, Mario, 59100 Prato (IT)
(74) Representative: Szary, Anne Catherine

(56) References cited:
- EP-A- 0 542 403
- EP-A- 0 919 700
- EP-A- 0 926 323
- EP-A- 1 209 324
- EP-A- 1 359 364
- US-A- 3 370 830
- US-A- 5 517 817

## Description

The present invention refers to an easy-fit heat screening device for connecting a cooling pipe and a through-hole formed in a nozzle support ring of a gas turbine.

As is known, gas turbines are machines consisting of a compressor and single or multiple-stage turbine, where these components are connected together by a rotating shaft and where a combustion chamber is provided between the compressor and the turbine.

In these machines, air from the external environment is supplied to the compressor so as to pressurise it.

The pressurised air passes through a series of pre-mixing chambers which terminate in a converging portion and inside each of which an injector feeds the fuel which is mixed with the air so as to form an air/burning fuel mixture.

The fuel is introduced inside the combustion chamber and is ignited by means of suitable sparking plugs so as to produce combustion which is aimed at causing an increase in temperature and pressure and therefore enthalpy of the gas.

At the same time, the compressor supplies pressurised air which is made to pass both through the burners and through the casing of the combustion chamber so that the abovementioned pressurised air is available for fuelling the combustion.

Then the high-temperature and high-pressure gas reaches, via suitable ducts, the different stages of the turbine which converts the enthalpy of the gas into mechanical energy which is available to the user.

It is known, moreover, that in order to achieve the maximum efficiency of a given gas turbine it is necessary for the temperature of the gas to be as high as possible; however, the maximum temperature values which can be reached during use of the turbine are limited by the strength of the materials used.

Furthermore, in gas turbines, as in other turbine machines, it is necessary to prevent these hot gases from being drawn into spaces which are situated around the impellers of the said turbines.

It is therefore necessary to pressurise suitably the cavities which are adjacent to the fluid path so as to prevent a reduction in the efficiency and excessively high operating temperatures of the turbine impellers.

In the known art, cooling pipes are used for this purpose, said pipes conveying a cooling air which is supplied from the compressor and having, for example, to pass through the nozzles of the first low-pressure stage (which are thus provided with suitable holes) and through the nozzle support ring, in order to reach the zones to be pressurised.

In particular, the air which is tapped from the compressor has a temperature which is considerably lower than the operating temperature of the nozzle support ring. In order to avoid - in the zones where the cooling pipes pass through a through-hole formed in the nozzle support ring - the spread of high temperatures inside the said support ring, heat screening devices have been introduced.

These devices are arranged between the cooling pipe and the through-hole of the nozzle support ring and comprise a tubular structure.

It is pointed out, moreover, that these tubular structures also perform another function. In fact they act as a seat for the cooling pipe and ensure a sealed connection with the through-hole formed in the nozzle support ring.

The cooling pipe, which generally has spherical ends, departs from an external casing of the turbine and terminates inside the through-hole of the nozzle support ring.

In some types of gas turbine, the seat for the spherical end of the cooling pipe is provided by a bush inserted from the outside of the nozzle support ring and locked with a ring nut on the inside of the ring itself. This is possible when the through-holes passing through the nozzle support ring are straight, there being only one zone where pressurisation is to be performed.

In gas turbines, however, where there are two zones to be supplied, the through-holes passing through the nozzle support ring are of two types: one which is straight and the other inclined. In this case, in the prior art, two different types of fixing devices are used, one for straight holes and one for inclined holes, using also two different fixing methods.

US 5,517,817 discloses a variable area turbine nozzle for use in a turbine engine. The variable area turbine nozzle adjusts the positions of its vanes to insure efficient operation of the turbine engine. A flanged bushing which has a tubular structure has an end which is inserted in a groove at one end of a first housing of a cooling chamber, a second housing of the cooling chamber being placed above and displaced from the first housing.

The present invention therefore seeks to overcome the abovementioned drawbacks and in particular that of providing an easy-fit heat screening device for connecting a cooling pipe and a through-hole formed in a nozzle support ring of a gas turbine which can be applied equally well to straight holes and inclined holes.

The present invention also seeks to provide an easy-fit heat screening device for connecting a cooling pipe and a through-hole formed in an nozzle support ring of a gas turbine which allows a reduction in production and maintenance costs compared to the prior art.

The present invention further seeks to provide an easy-fit heat screening device for connecting a cooling pipe and a through-hole formed in a nozzle support ring of a gas turbine which is particularly reliable, simple and functional.

These and other objects according to the present invention are achieved by providing an easy-fit heat screening device for connecting a cooling pipe and a through-hole formed in a nozzle support ring of a gas turbine as described in Claim 1.

Further characteristic features are described in the claims which follow.

The invention will now be described in greater detail, by way of example, with reference to the drawings, in which:-
Figure 1 is a cut-away side elevation view of a connection between a cooling pipe and a straight through-hole formed in a nozzle support ring of a gas turbine, with a heat screening device according to the prior art inserted therein;
Figure 2 shows a sectioned side elevation view of a connection between a cooling pipe and a through-hole, having two inclined sections formed in a nozzle support ring of a gas turbine, in one section there being inserted an easy-fit heat screening device according to the present invention;
Figure 3 shows a sectioned side elevation view of a connection between a cooling pipe and a straight through-hole formed in a nozzle support ring of a gas turbine, where a system for fixing a heat screening device according to the present invention using a mounting tool is shown;
Figure 4 shows an enlarged view of Figure 3 illustrating a top end of the heat screening device according to the present invention, after use of a mounting tool;
Figure 5 shows an enlarged view of Figure 3 illustrating a top end of the heat screening device according to the present invention, before use of a mounting tool.

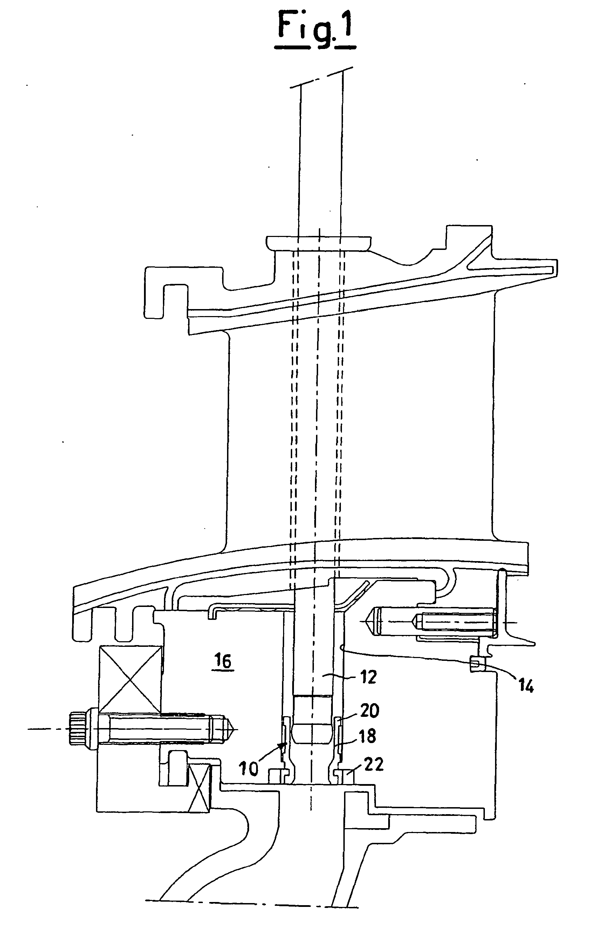

With reference to Figure 1, a heat screening device according to the prior art is indicated overall by 10, said device being intended to join together a cooling pipe 12 and straight through-hole 14 formed in a nozzle support ring 16 of a gas turbine.

In the example according to Figure 1, the screening device 10 comprises a tubular structure 18 having a top end 20 with an external diameter approximately equal to an internal diameter of the through-hole 14.

This tubular structure 18 is inserted from the outside of the nozzle support ring 16 and is arranged at a bottom end of the through-hole 14, being locked there by a ring nut 22 mounted on the inside of the said ring 16 so as to support the overlying tubular structure 18.

A bottom - generally spherical - end of the cooling pipe 12 extends inside the tubular structure 18.

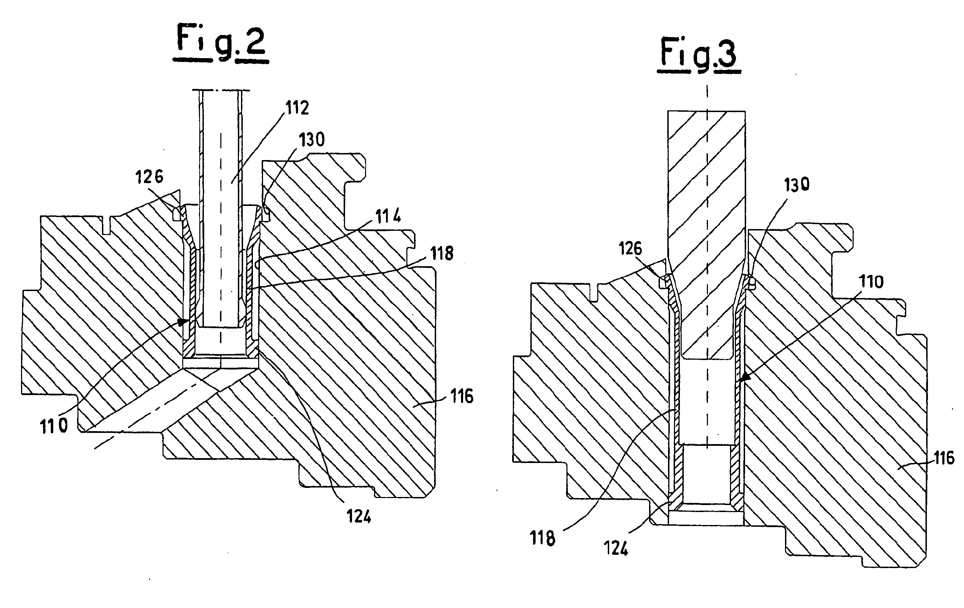

Figures 2, 3, 4 and 5 illustrate an easy-fit heat screening device 110, according to the present invention, for connecting a cooling pipe 112 and a through-hole 114 formed in a nozzle support ring 116 of a gas turbine, where components identical/or equivalent to those illustrated in Figure 1 have the same reference numbers increased of 100.

More precisely, Figure 2 shows a through-hole 114 having two sections inclined with respect to each other, whereas Figure 3 shows a straight through-hole 114.

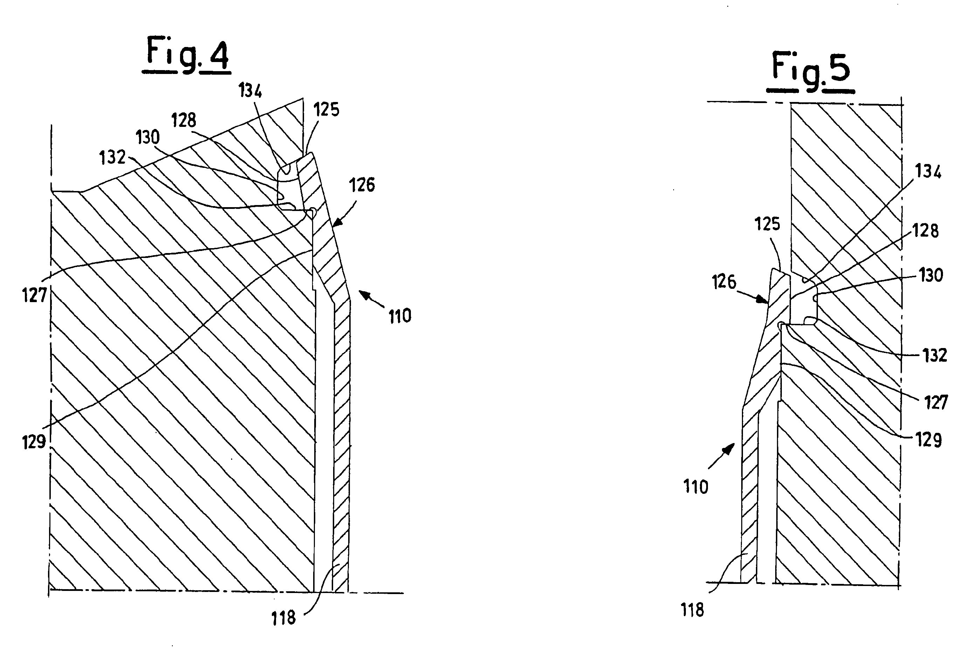

In both cases and as can be clearly seen in Figure 5, an upper zone of the through-hole 114 has a groove 130. The groove 130 is defined at the bottom by a first flat surface 132 which is substantially perpendicular to the axis of this upper zone and at the top by a second surface 134 having an inclination along a line directed towards an outer extension of the first surface 132.

The upper zone of the through-hole 114 has, above the groove 130, a first internal diameter greater than a second internal diameter provided underneath the said groove 130.

The screening device 110 comprises a tubular structure 118. This tubular structure 118 is inserted from the outside of the nozzle support ring 116 and is arranged inside the through-hole 114.

The tubular structure 118 has at the bottom an annular end 124 with an external diameter which is approximately equal to the second internal diameter of the through-hole 114.

At the top, the tubular structure 118 has a shaped annular end 126.

As can be clearly seen in Figure 5, an external surface of the shaped annular end 126 is formed with two different diameters. At the top a first external cylindrical surface 128 is provided, said surface having a diameter slightly smaller than the first internal diameter of the through-hole 114. At the bottom there is a second external cylindrical surface 129, with a diameter slightly smaller than the second internal diameter of the through-hole 114.

The first external cylindrical surface 128 is joined to the second external cylindrical surface 129 by a flat annular surface 127 which extends substantially perpendicularly with respect to the axis of the upper zone of the through-hole 114.

Finally, the shaped annular end 126 terminates at the top in a surface 125, having an inclination along a line directed towards an outer extension of the flat annular surface 127.

A bottom - generally spherical - end of the cooling pipe 112 extends inside the tubular structure 118.

The operating principle of the easy-fit heat screening device 110 for connecting a cooling pipe 112 and a through-hole 114 formed in a nozzle support ring 116 of a gas turbine, according to the present invention, is clear from that described above with reference to the figures and briefly is as follows.

The heat screening device 110 is inserted, from outside of the nozzle support ring 116, into the upper zone of the through-hole 114. Insertion is performed so that the flat annular surface 127 mates with the first flat surface 132 of the groove 130.

At this point, in order to lock the heat screening device 110 inside the through-hole 114, the shaped annular end 126 is engaged inside the groove 130.

More precisely, the shaped annular end 126 is bent, as can be seen in Figure 3, using for example a mounting tool with a conical end which is inserted from the outside of the nozzle support ring 116.

After this operation, as shown in Figure 4, the shaped annular end 126 enters partly inside the groove 130; in particular, the surface 125 of the shaped annular end 126 engages in an interfering manner with part of the second surface 134.

It is clear that the first external cylindrical surface 128 is designed with dimensions suitable for this purpose: the inclination of the second surface 134 is also approximately parallel to the inclination of the surface 125 of the shaped annular end 126 such that, after bending of the shaped annular end 126, the surface 125 makes firm contact with the second surface 134.

The heat screening device 110 advantageously uses an oil-hydraulic apparatus equipped with the conical-end mounting tool and able to generate a thrust, for example, of 10,000 Newton.

It should be noted how, in order to lock the device 110, it is necessary to act exclusively on the outside of the nozzle support ring 116.

It must also be pointed out how the material from which the heat screening device 110 according to the invention is made must have, in addition to heat resistance characteristics, also good plastic deformation properties required for bending of the shaped annular end 126.

The description provided clearly illustrates the characteristic features of the easy-fit heat screening device for connecting a cooling pipe and a through-hole formed in a nozzle support ring of a gas turbine according to the present invention, as well as the advantages associated therewith, including:
- simple installation and maintenance;
- reliability;
- lower costs, compared to the prior art, since there is a single heat screening device suitable for both a straight cooling pipe and a pipe with two sections inclined relative to each other: the reduction in the costs arises from the fact that use of the device according to the invention, although it requires a special tool, is industrially more simple than the prior art where it was required to perform a final safety spot weld.

## Claims

1. An easy-fit heat screening device (110) for connecting a cooling pipe (112) and a through-hole (114) formed in a nozzle support ring (116) of a gas turbine, of the type comprising a tubular structure (118) which has an external diameter generally smaller than a diameter of said through-hole (114) and into which said cooling pipe (112) extends, **characterized in that** said tubular structure (118) has at the top a shaped annular end (126) which is shaped for insertion by means of interference into an annular groove (130) formed in the inner wall of said through-hole (114), said groove (130) being formed in an upper zone of said through-hole (114), said groove (130) being defined at the bottom by a first flat surface (132) and at the top by a second surface (134), the second surface having an inclination along a line directed towards an outer extension of said first flat surface (132).

2. Heat screening device (110) according to Claim 1, further **characterized in that** said first flat surface (132) is substantially perpendicular to the axis of said upper zone of said through-hole (114), said upper zone of said through-hole (114) having, above said groove (130), a first internal diameter which is greater than a second internal diameter provided underneath said groove (130).

3. Heat screening device (110) according to Claim 2, further **characterized in that** an external surface of said shaped annular end (126) is formed with two different diameters, at the top there being provided a first external cylindrical surface (128), with a diameter slightly smaller than said first internal diameter of said through-hole (114), and at the bottom there being a second external cylindrical surface (129), with a diameter slightly smaller than said second internal diameter of said through-hole (114).

4. Heat screening device (110) according to Claim 3, further **characterized in that** said first external cylindrical surface (128) is joined to said second external cylindrical surface (129) by a flat annular surface (127) which extends substantially perpendicularly with respect to the axis of said upper zone of said through-hole (114).

5. Heat screening device (110) according to Claim 4, further **characterized in that** said shaped annular end (126) terminates at the top in a surface (125) with an inclination along a line directed towards an outer
extension of said flat annular surface (127).

6. Heat screening device (110) according to Claim 5, further **characterized in that** it is inserted, from the outside of said nozzle support ring (116), into said upper zone of the through-hole (114), insertion being performed so that said flat annular surface (127) mates with said first flat surface (132) of said groove (130).

## Patentansprüche

1. Leicht zu installierende Hitzeschutzvorrichtung (110) zum Verbinden einer Kühlleitung (112) und eines in einem Düsentragring (116) einer Gasturbine ausgebildeten Durchgangslochs (114), der Art, die eine rohrförmige Struktur (118) umfasst, deren Außendurchmesser im Allgemeinen kleiner ist als ein Durchmesser des Durchgangslochs (114) und in die sich die Kühlleitung (112) erstreckt, **dadurch gekennzeichnet, dass** die rohrförmige Struktur (118) oben ein geformtes ringförmiges Ende (126) aufweist, das für die Einführung durch Eingreifen in eine in der Innenwand des Durchgangslochs (114) ausgebildete ringförmige Nut (130) geformt ist, wobei die Nut (130) in einem oberen Bereich des Durchgangslochs (114) ausgebildet ist, wobei die Nut (130) unten durch eine erste ebene Oberfläche (132) und oben durch eine zweite Oberfläche (134) definiert ist, wobei die zweite Oberfläche eine Neigung entlang einer in Richtung einer Außenerstreckung der ersten ebenen Oberfläche (132) weisenden Linie aufweist.

2. Hitzeschutzvorrichtung (110) nach Anspruch 1, ferner **dadurch gekennzeichnet, dass** die erste ebene Oberfläche (132) im Wesentlichen senkrecht zur Achse des oberen Bereichs des Durchgangslochs (114) ist, wobei der obere Bereich des Durchgangslochs (114) oberhalb der Nut (130) einen ersten Innendurchmesser aufweist, der größer ist als ein unterhalb der Nut (130) vorgesehener zweiter Innendurchmesser.

3. Hitzeschutzvorrichtung (110) nach Anspruch 2, ferner **dadurch gekennzeichnet, dass** eine Außenfläche des geformten ringförmigen Endes (126) mit zwei unterschiedlichen Durchmessern ausgebildet ist, wobei oben eine erste zylindrische Außenfläche (128) vorgesehen ist, deren Durchmesser etwas kleiner ist als der erste Innendurchmesser des Durchgangslochs (114), und unten eine zweite zylindrische Außenfläche (129) vorhanden ist, deren Durchmesser etwas kleiner ist als der zweite Innendurchmesser des Durchgangslochs (114).

4. Hitzeschutzvorrichtung (110) nach Anspruch 3, weiterhin **dadurch gekennzeichnet, dass** die erste zylindrische Außenfläche (128) über eine ebene ringförmige Oberfläche (127), die sich bezogen auf die Achse des oberen Bereichs des Durchgangslochs (114) im Wesentlichen senkrecht erstreckt, mit der zweiten zylindrischen Außenfläche (129) verbunden ist.

5. Hitzeschutzvorrichtung (110) nach Anspruch 4, weiterhin **dadurch gekennzeichnet, dass** das geformte ringförmige Ende (126) oben in einer Oberfläche (125) mit einer Neigung entlang einer in Richtung einer Außenerstreckung der ebenen ringförmigen Oberfläche (127) weisenden Linie endet.

6. Hitzeschutzvorrichtung (110) nach Anspruch 5, weiterhin **dadurch gekennzeichnet, dass** sie von der Außenseite des Düsentragrings (116) in den oberen Bereich des Durchgangslochs (114) eingeführt wird, wobei die Einführung so erfolgt, dass die ebene ringförmige Oberfläche (127) an der ersten ebenen Oberfläche (132) der Nut (130) anliegt.

## Revendications

1. Ecran de protection thermique facile à monter (110) pour raccorder un tube de refroidissement (112) et un trou traversant (114) ménagé dans une couronne support de tuyère (116) d'une turbine à gaz, du type comprenant une structure tubulaire (118) qui a un diamètre externe généralement plus petit que le diamètre dudit trou traversant (114) et dans laquelle ledit tube de refroidissement (112) s'étend, **caractérisé en ce que** ladite structure tubulaire (118) présente au sommet une extrémité annulaire moulée (126) qui est conformée pour s'insérer par interférence dans une rainure annulaire (130) ménagée dans la paroi interne dudit trou traversant (114), ladite rainure (130) étant formée dans une zone supérieure dudit trou traversant (114), ladite rainure (130) étant définie au fond par une première surface plate (132) et au sommet par une seconde surface (134), la seconde surface ayant une inclinaison le long d'une ligne dirigée vers une extension externe de ladite première surface plate (132).

2. Ecran de protection thermique (110) selon la revendication 1, **caractérisé en outre en ce que** ladite première surface plate (132) est sensiblement perpendiculaire à l'axe de ladite zone supérieure dudit trou traversant (114), ladite zone supérieure dudit trou traversant (114) ayant, au-dessus de ladite rainure (130), un premier diamètre interne qui est supérieur à un second diamètre interne ménagé en dessous de ladite rainure (130).

3. Ecran de protection thermique (110) selon la revendication 2, **caractérisé en outre en ce qu'**une surface externe de ladite extrémité annulaire moulée (126) est formée avec deux diamètres différents, en prévoyant au sommet une première surface cylindrique externe (128) qui a un diamètre légèrement plus petit que ledit premier diamètre interne dudit trou traversant (114) et au fond une seconde surface cylindrique externe (129) qui a un diamètre légèrement plus petit que ledit second diamètre interne dudit trou traversant (114).

4. Ecran de protection thermique (110) selon la revendication 3, **caractérisé en outre en ce que** ladite première surface cylindrique externe (128) est jointe à ladite seconde surface cylindrique externe (129) par une surface annulaire plate (127) qui s'étend sensiblement perpendiculairement par rapport à l'axe de ladite zone supérieure dudit trou traversant (114).

5. Ecran de protection thermique (110) selon la revendication 4, **caractérisé en outre en ce que** ladite extrémité annulaire moulée (126) se termine au sommet par une surface (125) présentant une inclinaison le long d'une ligne dirigée vers une extension externe de ladite surface annulaire plate (127).

6. Ecran de protection thermique (110) selon la revendication 5, **caractérisé en outre en ce qu'**il est inséré de l'extérieur de ladite couronne support de tuyère (116) dans ladite zone supérieure du trou traversant (114), l'insertion se faisant de sorte que ladite surface annulaire plate (127) s'adapte à ladite première surface plate (132) de ladite rainure (130).
